# EUROPEAN PATENT SPECIFICATION

(11) **EP 1 310 064 B1**
(45) Date of publication and mention of the grant of the patent: **12.12.2007**
(21) Application number: 01944062.7
(22) Date of filing: 21.06.2001
(51) Int. Cl.: H04L 12/56, H04L 29/06

(54) **ARRANGEMENT AND METHOD FOR REALIZATION OF VIRTUAL SHARED MEDIUM FOR QoS**
ANORDNUNG UND VERFAHREN ZUR REALISIERUNG EINES GEMEINSAM BENUTZTEN VIRTUELLEN MEDIUMS FÜR QoS
AGENCEMENT ET PROCEDE PERMETTANT DE REALISER UN SUPPORT PARTAGE VIRTUEL DEDIE A LA QUALITE DE SERVICE (QOS)

(30) Priority: 07.07.2000 SE 0002582
(43) Date of publication of application: 14.05.2003
(73) Proprietor: Telia AB (publ), 123 86 Farsta (SE)
(72) Inventor: BERGSTEN, Anders, S-977 54 Lulea (SE); BORG, Niklas, S-120 58 Arsta (SE); JOHANSSON, Joachim, S-977 52 Lulea (SE); SVANBERG, Emil, S-973 32 Lulea (SE)
(74) Representative: Hopfgarten, Nils
(86) International application number: PCT/SE2001/001451
(87) International publication number: WO 2002/005498

(56) References cited:
- WO-A1-00/72516
- KANADA YASUSI: 'Rule-based modular representation of QoS policies' IEICE NETWORKING ARCHITECTURE WORKSHOP February 2000, pages 106 - 113, XP002962025
- YEOM I. AND NARASIMHA REDDY A.L.: 'Impact of marking strategy on aggregated flows in a differentiated services network' 7TH INTERNATIONAL WORKSHOP ON QUALITY OF SERVICE (IWQOS'99) 31 May 1999 - 04 June 1999, pages 156 - 158, XP010335994

## Description

### FIELD OF THE INVENTION

The invention relates to a system for achieving necessary QoS using a virtual shared medium in a communication network, and to a method for providing necessary QoS over a virtual shared medium in a communication network.

### BACKGROUND

Within Internet, functionality for QoS (Quality of Service) and service differentiation is beginning to be introduced. From just providing one type of service " best effort" one wants to be able to differentiate between different flows. At the same time as concepts in order to introduce QoS are produced within IETF (Internet Engineering Task Force), for instance DiffServ (Differentiated Services), functionality to support such services are beginning to be implemented in routers and other network elements. Within the working group DiffServ (within IETF) "A Conceptual Model for DiffServ Routers" (http://www.ietf.org/internet-drafts/draft-ietf-diffserv-model-01.txt) has been produced.
This model is built of "Traffic Conditioning Blocks" (TCBs), where a TCB is used for each interface and direction of the traffic flow. Each TCB consists in its turn of a combination of a number of components, classification, metering, action and queuing. The component classification classifies the packets to divide them into some form of flows. In metering, the transmission speed is metered in number of packets and bits per second to check if it complies with the agreement of how much the customer is allowed to transmit. Depending on whether the traffic is kept within given limits or not, different actions are taken. One action can for instance be to throw away packets if the flow is not kept within given limits. In the last step, queuing, the packets are queued up to be transmitted in correct order. One also within different fields is beginning to specify more complex services which shall be based on the new functionality.

In WO97/48051 a data distribution system for multicast is described, adapted to provide a guaranteed QoS for information distribution over an IP-network. The document, however, does not deal with the bandwidth problem.

In WO 99/53718 a system is described adapted to offer increased control of data flows in a data communication network. This is achieved according to the suggested solution by installing one or more control programs, which for instance can be adapted to multicast control.

In WO98/27689 a method and a device for multicasting in an ATM-network is described, at which a TCB is arranged as buffer for each priority class of ATM-cells.

### AIM OF THE INVENTION

For the survival of an Internet Service Provider, ISP, in the market today considerably more than just offering ordinary "best effort"-surfing on Internet is required. A variety of new services are growing, many based on QoS and/or multicast, that is directed data transmission to a plurality of users. Some services might be possible to realize at moderate costs if they were based on principles based on a shared medium. It can, for instance, be multicast-sessions where one wants that the whole session is allocated a total bandwidth which is shared by the participants in the session. This means that it will be easier to dimension the QoS-need of a session. When static dimensioning is possible, one does not need to calculate with the dynamics in the number of participants, which can be very expensive. This is an overall aim of the present invention.

One aspect of this aim is to realize a virtual shared medium on IP-level for QoS with regard to policing and metering-functionality. The technology for this, however, does not exist today, since the solutions of today are lacking connection between incoming and outgoing traffic, a requirement for a shared medium. The TCBs of today are not aware of each other.

### SUMMARY OF THE INVENTION

Above mentioned aims are fulfilled according to a first aspect of the present invention by a system according to claim 1. Thus a network unit has an input port and an output port for two-way communication in a session with an opposite party or user of a service, where each port includes a metering device arranged to meter data transmission speed in data flows, and an action device, from a communication point of view connected to respective metering device and arranged to take actions on respective data flows depending on the belonging metering device. The system is characterized in that the metering device in said input port is adapted to metering of data flows associated with a first service, and the metering device in, said output port is adapted to metering of data flows associated with the same service, in that said output port includes a calculation device arranged to calculate control data depending on the metering device in said input port and the metering device in said output port. Further, the action device in said output port is arranged to, for said service, take actions on the flow through the output port associated with the service depending on said control data. Preferably, each port further includes a classification device arranged to divide data packets of different services into different flows, from a communication point of view connected between the metering device in respective port and a data input of respective port for data incoming via the input port to the network unit, respective data outgoing via the output port from the network unit to the party included in the session. In addition each port preferably further includes a queuing device arranged to queue packets from said action device to a data output of respective port for outgoing data from the output port to the party included in the session, respective reception from the input port to the network unit.

In a preferred embodiment of the invention, said control data is the sum of data transmission speed of said service, as metered by said metering device in said input port and output port, that is the sum of incoming and outgoing data transmission speed or bandwidth of just that session. The metering device in the output port preferably includes control devices, adapted to check how metered and summed up transmission speed of a service is related to agreed bandwidth of the service in question for the party included in the session. The action device in the output port further includes means to throw away data packets if the sum of metered transmission speed of the service and the party included in the session exceeds agreed bandwidth. Said input port further preferably also includes a calculation device arranged to calculate the sum of data transmission speed of said service, as metered by the metering device in said input port and the metering device in said output port, and for said service, action device in said input port is arranged to take actions on the flow in the input port associated with the service depending on the summed up data transmission speed. Then also the metering device in the input port includes control devices, adapted to check how metered and summed up transmission speed of a service is related to agreed bandwidth of the service in question for the party included in the session. The action device in the input port includes means to throw data packets if the sum of metered transmission speed of the service and the party included in the session exceeds agreed bandwidth. In a preferred embodiment said network unit is a Diffserv-router. The Diff-Serv-router is preferably adapted to multicast sessions with a plurality of included parties, the Diffserv-router of respective included party being set up with an input port and an output port for two-way communication, and wherein the sum of incoming and outgoing data for each session is allocated a given data transmission speed.

According to a second aspect of the present invention a method is proposed for providing necessary Qos over a virtual shared medium in a communication network, in which network a network unit for a service communicates two-way in a session with another party, and wherein incoming data to the network unit is flowing via an input port and outgoing data from the network unit is flowing via an output port, including the steps to meter the transmission speed of said service in said input port, meter the transmission speed of said service in said output port, calculate control data depending on metered transmission speed in said input port and in said output port of said service, and to take actions on the flow of the service in the output port depending on said control data. Said control data are preferably the sum of metered data transmission speed in said input port and said output port.

In one embodiment further the step is included to, for the service check how metered and summed up transmission speed is related to agreed bandwidth of the other party, and to throw away data packets related to the service if the metered transmission speed of the service exceeds agreed bandwidth. The procedure preferably also includes the step to take actions on the flow of the service in the input port depending on said control data, for instance throw away data packets.

### BRIEF DESCRIPTION OF THE DRAWING

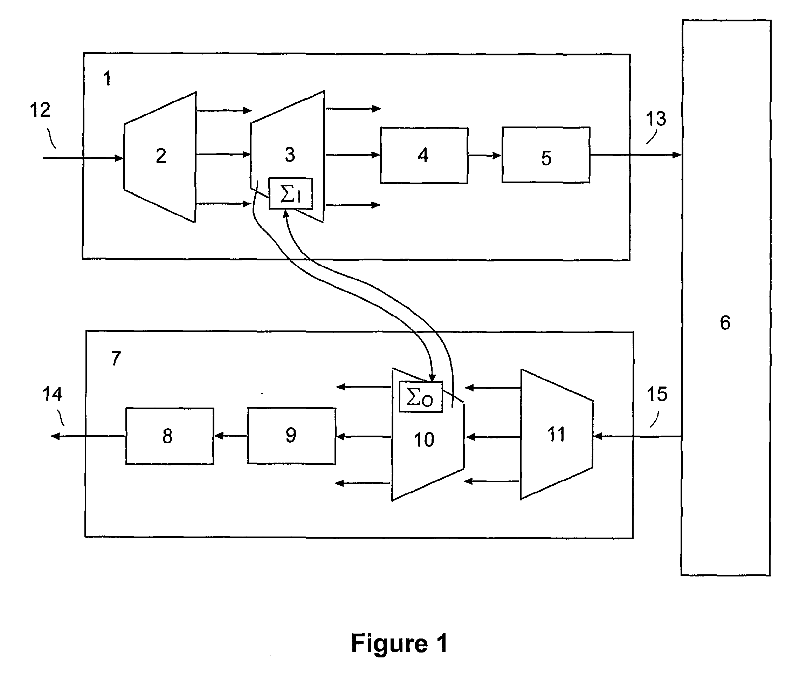

A preferred embodiment of the invention is described in detail below with reference to the only figure, at which
Figure 1 shows an arrangement at a network unit according to the present invention.

### DETAILED DESCRIPTION OF A PREFERRED EMBODIMENT

The idea of the invention is to introduce functionality to combine, preferably sum up, the meter-functionality in a first TCB in one direction with the meter-functionality in a second TCB in the other direction of the same interface of a network unit. In Figure 1 a first TCB 1 is drawn, arranged for input of data to a network unit 6, and a second TCB 7, arranged for output of data from the network unit 6. TCB 1 for input of data serves as an input port 1 to the network unit 6, and includes a classification device 2, that is a classifier, which, from a communication point of view, is connected to the data input 12 of the input port 1 for a data flow including data for a number of different services. The classification device 2 has in the illustrated embodiment three output ports, this, however, shall only be regarded as an example. To these three output ports the classification device 2 divides data flows belonging to different services. The data flows are each flowing to a metering device, that is a meter, but in the figure only one 3 of these is drawn. The service which is classified to the drawn metering device 3 is in the following called the service. The metering device 3 is arranged to meter the data transmission speed, that is occupied bandwidth, of the belonging flow/service. Depending on if metered data transmission speed exceeds agreed available bandwidth of the service, different actions can be taken/executed by different action devices, of which only one 4 is drawn. That the result can be different in the metering devices is represented by different arrows which are aiming out from the metering device 3. In the queuing device 5, the data packets from the different action devices are queued, so that they are transmitted in correct order from the output port 13 of TCB 1 to the network unit 6.

TCB 7 for output of data functions as an output port 7 of the network unit 6, and includes in equivalent way as TCB 1 a classification device 11, which, from a communication point of view, is connected to the data input 15 of the output port 7 for a data flow including data for several different services. Also here applies that the in the illustrated embodiment three output ports at the classification device 11 only shall be regarded as an example. TCB 7 further includes one or more metering devices, one of which 10 is drawn, and one or more action devices for each metering device, of which one 9 is shown. A queuing device 8 is arranged to queue the data packets from the different action devices, so that they are transmitted in correct order from the output port 14 at TCB 7.

The input port 1 and the output port 7 are arranged for two-way communication in a session between the network unit and an opposite party or user of the service. According to the invention, the metering devices 3,10 are combined by calculation devices Σ₀, Σ₁ being arranged in each port 1,7. The calculation devices Σ₀, Σ₁ are arranged to calculate control data by summing up by the metering devices 3,10 metered transmission speed of incoming data 12 and outgoing data 15 in the session. The action devices 4,9 by that can take/execute actions based on the same amount of traffic, but on traffic flows running in opposite directions. This results in that a virtual shared medium for QoS is possible to realize. This is particularly useful at multicast sessions. To make it possible to, to a multicast session, allocate a total bandwidth which is shared by the participants of the session is required that the different TCBs are aware of each other. In the access router, which includes the network unit 6, input port 1 and output port 7, the multicast traffic which flows in both directions and which belongs to the same multicast session, is filtered out, classified. The metering devices 3,10 in the TCBs 1,7, for incoming 12 and outgoing 15 traffic sum by respective calculation devices Σ₀, Σ₁ up the two flows. If the sum exceeds promised bandwidth, the flow out on the communication network, for instance the DiffServ-network, is limited by the action device 9 in the output port throwing away outgoing packets. In this way, according to the present invention, is controlled that a session does not use too much bandwidth. In one embodiment the metered flows are summed up only in one in the output port 7 arranged calculation device Σ₀, where also the possible action is taken/executed by the action device 9. In another embodiment, the metered flows are also summed up in one in the output port 1 arranged calculation device Σ₁, where also the possible action is taken/executed by the action device 4.

The invention can be used in routers in general, and can with advantage be applied to edge routers in the DiffServ-architecture. It is particularly suitable for services which are based on shared media. One example of such a service might be video conference via multicast sessions.

It is to the expert within the field evident that a number of variants and modifications of the described preferred embodiment are conceivable, without for that reason end up outside the scope of the invention, which is only limited by the claims below.

## Claims

1. A system for achieving necessary Qos using a virtual shared medium in a communication network, including a network unit (6) having an input port (1) and an output port (7) for two-way communication in a session, where each port (1,7) includes a metering device (3,10) arranged to meter data transmission speed, and an action device (4,9), from a communication point of view connected to respective metering devices (3,10) and arranged to take actions depending on the associated metering device,
**characterized in that** the metering device (3) in said input port (1) is adapted to metering of data flows associated with a first service, and the metering device (10) in said output port (7) is adapted to metering of data flow associated with the same service, **in that** said output port (7) includes a calculation device (Σ₀, Σ₁) arranged to calculate control data depending on the metering device (3) in said input port (1) and the metering device (10) in said output port, and **in that**, for said service the action device (9) in said output port (7) is arranged to, take actions on the flow associated with the service depending on said control data.

2. The system as claimed in claim 1, wherein each port (1,7) further includes a classification device (2,11) arranged to divide data packets of different services into different flows, from a communication point of view connected between the metering device (3,10) in respective port (1,7) and a data input (12,15) of respective port (1,7) for data incoming (12) via the input port (1) to the network unit (6), respective data outgoing (15) via the output port (7) from the network unit (6) to a party included in the session.

3. The system as claimed in claim 2, wherein each port (1,7) further includes a queuing device (5,8) arranged to queue packets from said action device (4,9) to a data output (13,14) of respective port (1,7) for outgoing data (14) from the output port (7) to a party included in the session, respective reception from the input port (13) to the network unit.

4. The system as claimed in any of the previous claims, wherein said control data is the sum of data transmission speed for said service, metered by said metering device (3,10) in said input port (1) and output port (7).

5. The system as claimed in claim 4, wherein the metering device (10) in the output port (7) includes control devices, adapted to check or control how metered and summed up transmission speed for a service is related to agreed bandwidth of the service in question for the party included in the session.

6. The system as claimed in claim 5, wherein the action device (9) in the output port (7) includes means to throw away data packets if the sum of metered transmission speed for the service and the party included in the session exceeds agreed bandwidth.

7. The system as claimed in claim 6, wherein said input port (1) includes a calculation device (Σ₁) arranged to calculate the sum of data transmission speed for said service, metered by the metering device (3) in said input port (1) and the metering device (10) in said output port, and that, for said service, the action device (4) in said input port (1) is arranged to take actions on the flow associated with the service depending on the summed up data transmission speed.

8. The system as claimed in claim 7, wherein the metering device (3) in the input port (1) includes control devices, adapted to check or control how met ed and summed up transmission speed for a service is related to agreed bandwidth of the service in question for the party included in the session.

9. The system as claimed in claim 8, wherein the action device (4) in the input port (1) includes means to throw away data packets if the sum of metered transmission speed for the service and party included in the session exceeds agreed bandwidth.

10. The system as claimed in claim 9, wherein said network unit (6) is a Diffserv-router.

11. The system as claimed in claim 10, wherein said network unit (6) is adapted to multicast sessions with a plurality of included parties, the network unit (6) for respective included party being set up with an input port (1) and an output port (7) for two-way communication, and wherein the sum of incoming (12) and outgoing (14) data for each session is allocated a given data transmission speed.

12. A method for providing necessary Qos over a virtual shared medium in a communication network, in which network a network unit (6) for a service communicates two-way in a session with another party, and wherein incoming data (12) to the network unit (6) is flowing via a input port (1) and outgoing data (14) from the network unit (6) is flowing via an output port (7), including the steps to:
- meter (3) the transmission speed for said service in said input port (1),
- meter (10) the transmission speed for said service in said output port (7),
- calculate (Σ₀, Σ₁) control data depending on metered transmission speed in said input port (1) and in said output port (7) for said service, and to
- take actions (9) on the flow for the service in the output port (7) depending on said control data.

13. The method as claimed in claim 12, wherein said control data is the sum of metered data transmission speed in said input port and said output port.

14. The method as claimed in claim 13, further including the step to, for the service, check or control how metered and summed up transmission speed is related to agreed bandwidth of the other party.

15. The method as claimed in claim 14, further including the step to throw away data packets related to the service if the metered transmission speed for that service exceeds agreed bandwidth.

16. The method as claimed in claim 15, further including the step to take actions (4) on the flow of the service in the input port (1) depending on said control data.

## Patentansprüche

1. System zum Erzielen notwendiger QoS (quality of service, Qualität des Dienstes) unter Verwendung eines virtuell gemeinsam genutzten Mediums in einem Kommunikationsnetz, das eine Netzeinheit (6) einschließt, die einen Eingangsanschluss (1) und einen Ausgangsanschluss (7) für Zweiwegkommunikation in einer Sitzung hat, wobei jeder Anschluss (1, 7) eine Messeinrichtung (3, 10), die dazu ausgebildet ist, Datenübertragungsgeschwindigkeit zu messen, und eine Aktionseinrichtung (4, 9) einschließt, die unter einem Kommunikationsgesichtspunkt mit entsprechenden Messeinrichtungen (3, 10) verbunden ist und dazu ausgebildet ist, Aktionen in Abhängigkeit von der damit verknüpften Messeinrichtung vorzunehmen, **dadurch gekennzeichnet, dass** die Messeinrichtung (3) in dem Eingangsanschluss (1) dazu ausgebildet ist, Datenflüsse zu messen, die mit einem ersten Dienst verknüpft sind, und die Messeinrichtung (10) in dem Ausgangsanschluss (7) dazu ausgebildet ist, Datenflüsse zu messen, die mit demselben Dienst verknüpft sind, dass der Ausgangsanschluss (7) eine Recheneinheit (Σ₀, Σ₁) einschließt, die dazu ausgebildet ist, Steuerdaten in Abhängigkeit von der Messeinrichtung (3) in dem Eingangsanschluss (1) und der Messeinrichtung (10) in dem Ausgangsanschluss zu berechnen, und dass für diesen Dienst die Aktionseinrichtung (9) in dem Ausgangsanschluss (7) dazu ausgebildet ist, Aktionen auf den Fluss, der mit dem Dienst verknüpft ist, in Abhängigkeit von den Steuerdaten auszuführen.

2. System nach Anspruch 1, bei dem jeder Anschluss (1, 7) weiter eine Klassifikationseinrichtung (2, 11) einschließt, die dazu ausgebildet ist, Datenpakete von unterschiedlichen Diensten in unterschiedliche Ströme unter einem Kommunikationsgesichtspunkt aufzuteilen, die zwischen der Messeinrichtung (3, 10) in dem entsprechenden Anschluss (1, 7) und einem Dateneingang (12, 14) des entsprechenden Anschlusses (1, 7) für über den Eingangsanschluss (1) zur Netzeinheit (6) ankommende Daten (12) verbunden ist, wobei entsprechende Daten, die über den Ausgangsanschluss (7) von der Netzeinheit (6) zu einer Partei ausgehen (15), die in der Sitzung eingeschlossen ist.

3. System nach Anspruch 2, bei dem jeder Anschluss (1, 7) weiter eine Wartenschlangen bildende Einrichtung (5, 8) einschließt, die dazu ausgebildet ist, Pakete von der Aktionseinrichtung (4, 9) zu einem Datenausgang (13, 14) des entsprechenden Anschlusses (1, 7) für von dem Ausgangsanschluss (7) zu einer in der Sitzung eingeschlossenen Partei ausgehende Daten (14) bzw. vom Empfang von dem Eingangsanschluss (13) zur Netzeinheit in einer Warteschlange anzuordnen.

4. System nach einem der vorangehenden Ansprüche, bei der die Steuerdaten die Summe von Datenübertragungsgeschwindigkeit für den Dienst ist, gemessen durch die Messeinrichtung (3, 10) in dem Eingangsanschluss (1) und Ausgangsanschluss (7).

5. System nach Anspruch 4, bei dem die Messeinrichtung (10) im Ausgangsanschluss (7) Steuereinrichtungen einschließt, die dazu ausgebildet sind, zu prüfen oder zu steuern, wie gemessene und aufsummierte Übertragungsgeschwindigkeit für einen Dienst zusammenhängt mit der vereinbarten Bandbreite des fraglichen Dienstes für die Partei, die in die Sitzung eingeschlossen ist.

6. System nach Anspruch 5, bei dem die Aktionseinrichtung (9) im Ausgangsanschluss (7) Mittel einschließt, Datenpakete zu verwerfen, wenn die Summe von gemessener Übertragungsgeschwindigkeit für den Dienst und die in den Dienst eingeschlossene Partei die vereinbarte Bandbreite übersteigt.

7. System nach Anspruch 6, bei dem der Eingangsanschluss (1) eine Recheneinheit (Σ₁) einschließt, die dazu ausgebildet ist, die Summe der Datenübertragungsgeschwindigkeit für den Dienst, gemessen durch die Messeinrichtung (3) in dem Eingangsanschluss (1) und die Messeinrichtung (10) in dem Ausgangsanschluss, zu berechnen, und dass für diesen Dienst die Aktionseinrichtung (4) im Eingangsanschluss (1) dazu ausgebildet ist, Aktionen auf den Fluss, der mit dem Dienst verknüpft ist, in Abhängigkeit von der aufsummierten Datenübertragungsgeschwindigkeit vorzunehmen.

8. System nach Anspruch 7, bei dem die Messeinrichtung (3) im Eingangsanschluss (1) Steuereinrichtungen einschließt, die dazu ausgebildet sind, zu prüfen oder zu steuern, wie gemessene und aufsummierte Übertragungsgeschwindigkeit für einen Dienst mit der vereinbarten Bandbreite des fraglichen Dienstes für die in die Sitzung eingeschlossene Partei in Beziehung steht.

9. System nach Anspruch 8, bei der die Aktionseinrichtung (4) im Eingangsanschluss (1) Mittel einschließt. Datenpakete zu verwerfen, wenn die Summe der gemessenen Übertragungsgeschwindigkeit für den Dienst und die Partei, die in die Sitzung eingeschlossen ist, die vereinbarte Bandbreite übersteigt.

10. System nach Anspruch 9, bei dem die Netzeinheit (6) ein DiffServ-Router ist.

11. System nach Anspruch 10, bei dem die Netzeinheit (6) dazu ausgebildet ist, Sitzungen mit einer Mehrzahl von eingeschlossenen Parteien im Multicastverfahren zu betreiben, wobei die Netzeinheit (6) für die entsprechende eingeschlossene Partei mit einem Eingangsanschluss (1) und einem Ausgangsanschluss (7) für Zweiwegkommunikation eingerichtet ist, und wobei der Summe der ankommenden (12) und abgehenden (14) Daten für jede Sitzung einer gegebenen Datenübertragungsgeschwindigkeit zugeteilt wird.

12. Verfahren zum Schaffen der notwendigen QoS über ein virtuell gemeinsam genutztes Medium in einem Kommunikationsnetz, in welchem Netz eine Netzeinheit (6) für einen Dienst in zwei Richtungen in einer Sitzung mit einer anderen Partei kommuniziert und wobei zu der Netzeinheit (6) ankommende Daten (12) über einen Eingangsanschluss (1) strömen und von der Netzeinheit (6) abgehende Daten (14) über einen Ausgangsanschluss (7) strömen, das die Schritte einschließt :
- die Übertragungsgeschwindigkeit für den Dienst in dem Eingangsanschluss (1) zu messen (3),
- die Übertragungsgeschwindigkeit für den Dienst in dem Ausgangsanschluss (7) zu messen,
- Steuerdaten in Abhängigkeit von der gemessenen Übertragungsgeschwindigkeit in dem Einganganschluss (1) und dem Ausgangsanschluss (7) für den Dienst zu berechnen (Σ₀, Σ₁), und
- Aktionen (9) auf dem Fluss für den Dienst im Ausgangsanschluss (7) in Abhängigkeit von den Steuerdaten vorzunehmen.

13. Verfahren nach Anspruch 12, bei dem die Steuerdaten die Summe der gemessenen Datenübertragungsgeschwindigkeit in dem und dem Ausgangsanschluss sind.

14. Verfahren nach Anspruch 13, das weiter den Schritt einschließt, für den Dienst zu prüfen oder zu steuern, wie die gemessene und aufsummierte Übertragungsgeschwindigkeit in Beziehung steht zur vereinbarten Bandbreite der anderen Partei.

15. Verfahren nach Anspruch 14, das weiter den Schritt einschließt, Datenpakete zu verwerfen, die sich auf den Dienst beziehen, wenn die gemessene Übertragungsgeschwindigkeit für diesen Dienst die vereinbarte Bandbreite übersteigt.

16. Verfahren nach Anspruch 15, das weiter den Schritt einschließt, Aktionen (4) auf den Fluss des Dienstes im Eingangsanschluss (1) in Abhängigkeit von den Steuerdaten vorzunehmen.

## Revendications

1. Système pour atteindre une qualité de service (QoS) nécessaire en utilisant un support partagé virtuel dans un réseau de communication, incluant une unité de réseau (6) ayant un port d'entrée (1) et un port de sortie (7) pour une communication bidirectionnelle dans une session, où chaque port (1, 7) inclut un dispositif de mesure (3, 10) agencé pour mesurer une vitesse de transmission de données, et un dispositif d'actions (4, 9), à partir d'un point de vue de communication connecté à des dispositifs de mesure respectifs (3, 10) et agencé pour réaliser des actions dépendant du dispositif de mesure associé, **caractérisé en ce que** le dispositif de mesure (3) dans ledit port d'entrée (1) est adapté pour mesurer des flux de données associés à un premier service, et le dispositif de mesure (10) dans ledit port de sortie (7) est adapté pour mesurer des flux de données associés au même service, et **en ce que** ledit port de sortie (7) inclut un dispositif de calcul (Σ₀, Σ₁) pour calculer des données de commande dépendant du dispositif de mesure (3) dans ledit port d'entrée (1) et du dispositif de mesure (10) dans ledit port de sortie, et **en ce que**, pour ledit service, le dispositif d'actions (9) dans ledit port de sortie (7) est agencé pour réaliser des actions sur le flux associé au service dépendant desdites données de commande.

2. Système selon la revendication 1, dans lequel chaque port (1, 7) inclut de plus un dispositif de classification (2, 11) agencé pour diviser des paquets de données de différents services en différents flux, à partir d'un point de vue de communication connecté entre le dispositif de mesure (3, 10) dans un port respectif (1, 7) et une entrée de données (12, 15) du port respectif (1, 7) pour des données entrant (12) via le port d'entrée (1) dans l'unité de réseau (6), des données respectives sortant (15) via le port de sortie (7) à partir de l'unité de réseau (6) vers un abonné inclus dans la session.

3. Système selon la revendication 2, dans lequel chaque port (1, 7) inclut de plus un dispositif de mise en file d'attente (5, 8) agencé pour mettre en file d'attente des paquets provenant dudit dispositif d'actions (4, 9) vers une sortie de données (13, 14) du port respectif (1, 7) pour délivrer en sortie des données (14) à partir du port de sortie (7) à un abonné inclus dans la session, une réception respective à partir du port d'entrée (13) vers l'unité de réseau,

4. Système selon l'une quelconque des revendications précédentes, dans lequel lesdites données de commande sont la somme de vitesse de transmission de données pour ledit service, mesurée par ledit dispositif de mesure (3, 10) dans ledit port d'entrée (1) et ledit port de sortie (7).

5. Système selon la revendication 4, dans lequel le dispositif de mesure (10) dans le port de sortie (7) inclut des dispositifs de commande, adaptés pour contrôler ou commander la manière dont la vitesse de transmission mesurée et cumulée pour un service est liée à une largeur de bande accordée du service en question pour l'abonné inclus dans la session.

6. Système selon la revendication 5, dans lequel le dispositif d'actions (9) dans le port de sortie (7) inclut des moyens pour rejeter des paquets de données si le cumul de vitesse de transmission mesuré pour le service et l'abonné inclus dans la session dépasse la largeur de bande accordée.

7. Système selon la revendication 6, dans lequel ledit port d'entrée (1) inclut un dispositif de calcul (Σ₁) agencé pour calculer le cumul de vitesse de transmission de données pour ledit service, mesuré par le dispositif de mesure (3) dans ledit port d'entrée (1) et le dispositif de mesure (10) dans ledit port de sortie, et où, pour ledit service, le dispositif d'actions (4) dans ledit port d'entrée (1) est agencé pour réaliser des actions sur le flux associé au service dépendant de la vitesse de transmission de données cumulée.

8. Système selon la revendication 7, dans lequel le dispositif de mesure (3) dans le port d'entrée (1) inclut des dispositifs de commande, adaptés pour contrôler ou commander la manière dont la vitesse de transmission mesurée et cumulée pour un service est liée à une largeur de bande accordée du service en question pour l'abonné inclus dans la session.

9. Système selon la revendication 8, dans lequel le dispositif d'actions (4) dans le port d'entrée (1) inclut des moyens pour rejeter des paquets de données si la somme de vitesse de transmission mesurée pour le service et l'abonné inclus dans la session dépasse la largeur de bande accordée.

10. Système selon la revendication 9, dans lequel ladite unité de réseau (6) est un routeur DiffServ.

11. Système selon la revendication 10, dans lequel ladite unité de réseau (6) est adaptée à des sessions de multidiffusion avec une pluralité d'abonnés inclus, l'unité de réseau (6) pour l'abonné inclus respectif étant établie avec un port d'entrée (1) et un port de sortie (7) pour la communication bidirectionnelle, et dans lequel la somme de données entrantes (12) et sortantes (14) pour chaque session est affectée d'une vitesse de transmission de données donnée.

12. Procédé pour fournir une qualité de service (QoS) nécessaire sur un support partagé virtuel dans un réseau de communication, dans lequel réseau une unité de réseau (6) pour un service communique de manière bidirectionnelle dans une session avec un autre abonné, et dans lequel des données entrantes (12) dans l'unité de réseau (6) circulent via un port d'entrée (1) et des données sortantes (14) depuis l'unité de réseau (6) circulent via un port de sortie (7), incluant les étapes consistant à :
- mesurer (3) la vitesse de transmission pour ledit service dans ledit port d'entrée (1),
- mesurer (10) la vitesse de transmission pour ledit service dans ledit port de sortie (7),
- calculer (Σ₀, Σ₁) des données de commande dépendant de la vitesse de transmission mesurée dans ledit port d'entrée (1) et dans ledit port de sortie (7) pour ledit service, et
- réaliser des actions (9) sur le flux pour le service dans le port de sortie dépendant desdites données de commande.

13. Procédé selon la revendication 12, dans lequel lesdites données de commande sont la somme de vitesse de transmission de données mesurée dans ledit port d'entrée et ledit port de sortie.

14. Procédé selon la revendication 13, incluant de plus l'étape consistant à, pour le service, contrôler ou commander la manière dont la vitesse de transmission mesurée et cumulée est liée à une largeur de bande accordée de l'autre abonné.

15. Procédé selon la revendication 14, incluant de plus l'étape consistant à rejeter des paquets de données liés au service si la vitesse de transmission mesurée pour ce service dépasse la largeur de bande accordée,

16. Procédé selon la revendication 15, incluant de plus l'étape consistant à réaliser des actions (4) sur le flux du service dans le port d'entrée (1) dépendant desdites données de commande.
